# EUROPEAN PATENT APPLICATION

(11) **EP 3 879 443 A2**
(43) Date of publication of application: **15.09.2021**
(21) Application number: 21164539.5
(22) Date of filing: 24.03.2021
(51) Int. Cl.: G06K 9/00

(54) **METHOD AND APPARATUS FOR RECOGNIZING WEARING STATE OF SAFETY BELT, ELECTRONIC DEVICE, AND STORAGE MEDIUM**

(30) Priority: 29.06.2020 CN 202010604996
(71) Applicant: BEIJING BAIDU NETCOM SCIENCE AND TECHNOLOGY CO. LTD., 100085 Beijing (CN)
(72) Inventor: WANG, Keyao, Beijing, 100085 (CN); FENG, Haocheng, Beijing, 100085 (CN); YUE, Haixiao, Beijing, 100085 (CN)
(74) Representative: Studio Torta S.p.A.

(57) **Abstract**

A method and an apparatus for recognizing a wearing state of a safety belt are disclosed. The method includes: obtaining an image by monitoring a vehicle; performing face recognition on the image to obtain a face region; determining a target region from the image based on a size and a position of the face region; and recognizing a wearing state of a safety belt based on an image feature of the target region.

## Description

### FIELD

The disclosure relates to fields of computer vision, artificial intelligence and deep learning technologies, and particularly relates to a method and an apparatus for recognizing a wearing state of a safety belt, an electronic device, and a storage medium.

### BACKGROUND

A safety belt is an active safety device on a vehicle. When the vehicle makes an emergency brake due to a collision or an unexpected situation, the safety belt may bind a driver or passenger to a seat by restraint, thereby avoiding a situation that the driver or passenger is subjected to a secondary collision or even thrown out of the vehicle.

Therefore, it is very important to recognize whether the driver or passenger wears the safety belt. For example, a reminder or an alert is provided when the safety belt is not worn, which may not only ensure safe driving, but also raise awareness of people to obey the traffic regulations.

### SUMMARY

A first aspect of embodiments of the disclosure provide a method for recognizing a wearing state of a safety belt. The method includes: obtaining an image by monitoring a vehicle; performing face recognition on the image to obtain a face region; determining a target region from the image based on a size and a position of the face region; and recognizing a wearing state of a safety belt based on an image feature of the target region.

A second aspect of embodiments of the disclosure provide an apparatus for recognizing a wearing state of a safety belt. The apparatus includes: an obtaining module, a face recognition module, a determining module, and a state recognition module. The obtaining module is configured to obtain an image by monitoring a vehicle. The face recognition module is configured to perform face recognition on the image to obtain a face region. The determining module is configured to determine a target region from the image based on a size and a position of the face region. The state recognition module is configured to recognize a wearing state of a safety belt based on an image feature of the target region.

A third aspect of embodiments of the disclosure provides an electronic device. The electronic device includes: at least one processor, and a memory. The memory is communicatively coupled to the at least one processor. The memory is configured to store instructions executable by the at least one processor. The at least one processor is caused to execute the method for recognizing the wearing state of the safety belt according to the first aspect of embodiments of the disclosure when the instructions are executed by the at least one processor.

A fourth aspect of embodiments of the disclosure provides a non-transitory computer readable storage medium having computer instructions stored thereon. The computer instructions are configured to cause a computer to execute the method for recognizing the wearing state of the safety belt according to the first aspect of embodiments of the disclosure.

A fifth aspect of embodiments of the disclosure provides a computer program product, wherein when instructions in the computer program product are executed by a processor, the method for recognizing the wearing state is implemented according to the first aspect of embodiments of the disclosure.

Any above embodiment in the disclosure has following advantages or beneficial effects.

The face recognition is performed on an image obtained by monitoring the vehicle, to obtain a face region, a target region is determined from the image based on a size and a position of the face region, and a wearing state of a safety belt is recognized based on an image feature of the target region. In this way, by estimating a wearing region of the safety belt, which is recorded as a target region in the disclosure, the wearing state of the safety belt is recognized only for the target region, thereby effectively reducing an interference of other useless information in a monitoring image, reducing a computation amount, and improving a recognition speed. The method may be applied to a device with a low computing power, such as a vehicle-mounted device, which improves the applicability of the method.

It should be understood that, the contents described in the Summary are not intended to recognize key or important features of embodiments of the disclosure, nor is it intended to limit the scope of the disclosure. Other features of the disclosure will become apparent from the following description.

### BRIEF DESCRIPTION OF THE DRAWINGS

The accompanying drawings are used for better understanding the solution and do not constitute a limitation of the disclosure.
FIG. 1 is a flow chart illustrating a method for recognizing a wearing state of a safety belt according to Embodiment one of the disclosure.
FIG. 2 is a flow chart illustrating a method for recognizing a wearing state of a safety belt according to Embodiment two of the disclosure.
FIG. 3 is a flow chart illustrating a method for recognizing a wearing state of a safety belt according to Embodiment three of the disclosure.
FIG. 4 is a flow chart illustrating a method for recognizing a wearing state of a safety belt according to Embodiment four of the disclosure.
FIG. 5 is a schematic diagram illustrating a network structure of a convolutional neural network in the disclosure.
FIG. 6 is a block diagram illustrating an apparatus for recognizing a wearing state of a safety belt according to Embodiment five of the disclosure.
FIG. 7 is a structural block diagram illustrating an apparatus for recognizing a wearing state of a safety belt according to Embodiment six of the disclosure.
FIG. 8 is a block diagram illustrating an electronic device capable of implementing a method for recognizing a wearing state of a safety belt according to embodiments of the disclosure.

### DETAILED DESCRIPTION

Description will be made below to exemplary embodiments of the disclosure with reference to accompanying drawings, which includes various details of embodiments of the disclosure to facilitate understanding and should be regarded as merely examples. Therefore, it should be recognized by the skilled in the art that various changes and modifications may be made to the embodiments described herein without departing from the scope and spirit of the disclosure. Meanwhile, for clarity and conciseness, descriptions for well-known functions and structures are omitted in the following description.

Description will be made below to a method and an apparatus for recognizing a wearing state of a safety belt, an electronic device, and a storage medium according to embodiments of the disclosure with reference to accompanying drawings.

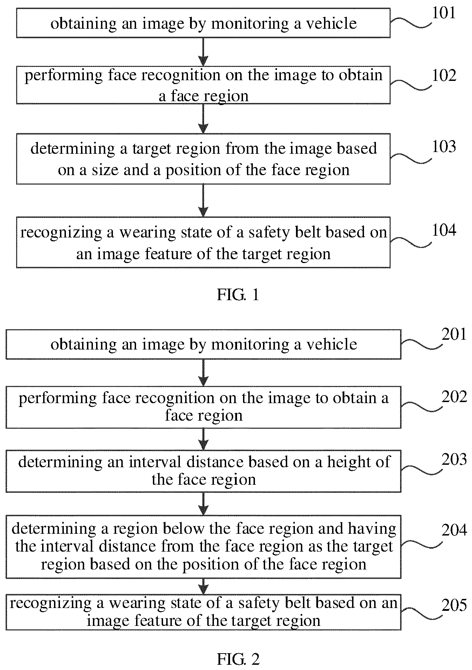

FIG. 1 is a flow chart illustrating a method for recognizing a wearing state of a safety belt according to Embodiment one of the disclosure.

Embodiments of the disclosure take as an example for illustration that the method for recognizing the wearing state of the safety belt is configured in an apparatus for recognizing a wearing state of a safety belt. The apparatus for recognizing the wearing state of the safety belt may be applied to any electronic device, such that the electronic device may perform recognition function on the wearing state of the safety belt.

The electronic device may be any device with a computing power, such as a personal computer (PC), a mobile terminal, a server, and the like. The mobile terminal may be a hardware device with various operating systems, a touch screen and/or a display screen, such as a mobile phone, a tablet, a personal digital assistant, a wearable device, or a vehicle-mounted device.

As illustrated in FIG. 1, the method for recognizing the wearing state of the safety belt may include the following blocks 101-104.

At block 101, an image is obtained by monitoring a vehicle.

In embodiments of the disclosure, the vehicle refers to a device for carrying a human or for transportation, such as, a conveyance (a car, a train, etc.), a water device (a ship, a submarine, etc.), or a flight vehicle (an airplane, a space shuttle, a rocket, etc.).

In embodiments of the disclosure, the image may be collected by the electronic device in real time, or the image may be collected or downloaded by the electronic device in advance, or the image may be also browsed online by the electronic device, or the image may be further collected by the electronic device from an external device, which is not limited in the disclosure.

As an example, the vehicle may be monitored by the electronic device to obtain the image. For example, the electronic device may be provided with a camera, and the vehicle may be monitored in real time or intermittently by the camera to obtain the image. For example, the electronic device may be the mobile terminal such as the mobile phone, the tablet, or the vehicle-mounted device, such that the electronic device may perform image collection for a vehicle environment to obtain the image.

As another example, the vehicle may be monitored by the external device to obtain the image. The electronic device may communicate with the external device to obtain the image. For example, when the vehicle is a conveyance, the external device may be a camera at a traffic intersection, through which the vehicle may be monitored to obtain the image. The electronic device may be a device of a monitoring center, such that the electronic device may communicate with the camera at the traffic intersection to obtain the image collected by the camera at the traffic intersection.

The number of cameras provided on the electronic device is not limited, such as, one or more. A form in which the camera is provided on the electronic device is not limited. For example, the camera may be built in the electronic device, or placed outside the electronic device. As another example, the camera may be a front camera or a rear camera. The camera may be any type of camera. For example, the camera may be a color camera, a black-and-white camera, a depth camera, a telephoto camera, a wide-angle camera, or the like, which is not limited here.

When the electronic device is provided with a plurality of cameras, the plurality of cameras may be in a same type or different types, which is not limited in the disclosure. For example, all the cameras may be the color cameras, or the black-and-white cameras. One of the cameras may also be the telephoto camera, and the other cameras are the wide-angle cameras, and so on.

In embodiments of the disclosure, a user operation may be detected, and the image may be obtained in response to the user operation. The image collection may also be performed continuously or intermittently to obtain the image. The electronic device may also continuously or intermittently communicate with the external device to obtain the image collected by the external device.

At block 102, face recognition is performed on the image to obtain a face region.

In embodiments of the disclosure, the face recognition may be performed on the image based on a face recognition algorithm to obtain a face region, or based on a target recognition algorithm to obtain the face region. For example, the face recognition may be performed on the image to obtain the face region based on the target detection algorithm such as a single shot MultiBox detector (SSD), a you only look once (YOLO), or a Faster-RCNN.

As an example, in order to improve accuracy of a recognition result, the face recognition may be performed on the image to obtain the face region based on a deep learning technology. For example, a large number of sample images marked with the face region may be employed to train a face detection model, such that the trained face detection model learns a correspondence between the face region and the image. Therefore, in the disclosure, the image may be taken as an input of the face detection model after the image is obtained, and the face detection model may be adopted to perform the face recognition on the image to output the face region.

It should be understood that the image may include a plurality of faces, such as faces simultaneously existing at a driver's seat region and a front passenger seat region. In this case, in order to improve accuracy of a detection result, each face in the image may be detected to obtain a face region corresponding to each face.

At block 103, a target region is determined from the image based on a size and a position of the face region.

In embodiments of the disclosure, the target region is used to indicate a wearing position of the safety belt.

It may be known based on prior knowledge that, a region where the driver or the passenger wears the safety belt generally is located below the face region, that is, the wearing position of the safety belt is located below the face region. Therefore, in the disclosure, after the face region is recognized, a recognition region of the safety belt may be determined based on the downward region of the face region, which is recorded as the target region in the disclosure. The downward region refers to a region downwards the face region, which is relative to the face region.

It should be understood that, there is one target region when the image includes only one face region, and there are also a plurality of target regions when the image includes the plurality of face regions. A corresponding target region may be determined based on the size and position of each face region.

At block 104, the wearing state of the safety belt is recognized based on an image feature of the target region.

In embodiments of the disclosure, the wearing state of the safety belt includes a wearing state and a non-wearing state.

In embodiments of the disclosure, the image feature may include at least one of a color feature, a texture feature, a shape feature, and a spatial relationship feature.

In embodiments of the disclosure, after each target region is determined, feature extraction may be performed on each target region based on a feature extraction algorithm, to obtain the image feature of each target region. For example, the color feature of each target region may be extracted with a color histogram method. The texture feature of each target region may be extracted based on statistics. The shape feature of each target region may be extracted with a geometric parameter method and a shape invariant moment method. Each target region may be evenly divided into several regular sub-blocks. Then the image feature of each sub-block may be extracted, and an index may be established, to obtain a spatial relationship feature corresponding to each target region.

The feature extraction is a concept in computer vision and image processing. The feature extraction refers to extract image information by using a computer, and decides whether a point of each image belong to an image feature. The feature extraction is performed to divide the points of the image into different subsets. The different subsets often belong to an isolated point, a continuous curve or a continuous region.

In embodiments of the disclosure, the wearing state of the safety belt may be recognized based on the image feature of each target region after the image feature of each target region is determined.

As a possible implementation, in order to improve the accuracy of the recognition result, each target region may be recognized based on the deep learning technology, and the wearing state of safety belt in each target region may be determined. For example, each target region may be recognized by a classification model, and the wearing state of the safety belt in each target region may be determined.

During training the classification model, a label of a sample image is 1 when the safety belt in the sample image is in the wearing state, and the label of the sample image is 0 when the safety belt in the sample image is in the non-wearing state. The trained classification model is utilized to recognize the image feature of the target region, and a classification probability is outputted between 0 and 1. The closer the classification probability is to 1, the greater a probability that the safety belt in the image is in the wearing state is. Therefore, a probability threshold may be set as 0.5 for example. It is determined that the safety belt is in the wearing state when the classification probability outputted by the classification model is greater than or equal to the probability threshold. It is determined that the safety belt is in the non-wearing state when the classification probability outputted by the classification model is lower than the probability threshold.

As an example, for each target region, the feature extraction may be performed on the target region by a convolutional neural network, to obtain the image feature of the target region. The image feature of the target region is inputted to a full link layer, and the wearing state of the safety belt may be determined based on an output from the full link layer. For example, when the classification probability outputted by the full link layer is lower than 0.5, it may be approximately regarded as 0, and the safety belt may be determined as being in the non-wearing state. When the classification probability outputted by the full link layer is greater than 0.5, it may be approximately regarded as 1, and the safety belt may be determined as being in the wearing state. The convolution neural network includes a convolution layer and a pooling layer.

As an application scene, the image collection may be performed on the environment within the vehicle by the electronic device to obtain the image. For example, the electronic device is the mobile terminal such as the mobile phone, the tablet or the vehicle-mounted device. The electronic device may be located within the vehicle, and the collected image may include a plurality of faces, such as the faces simultaneously existing in a driver's seat region, a front passenger seat region, and a rear passenger region. In this case, the plurality of faces may be obtained by performing the face recognition on the image, and the wearing state of the safety belt may be recognized for each wearing region (i.e., the target region) of the safety belt below each face region.

Further, the driver or passenger may also be reminded when the wearing state of the safety belt is in the non-wearing state. For example, a reminder message may be broadcast to the driver or the passenger in a way of voice broadcast via a speaker. The non-wearing state of the safety belt may also be visually displayed by an indicator light. The reminder message for the non-wearing state may also be displayed in a display screen. The reminder message may also be sent to a mobile device of the driver. The driver or the passenger may also be reminded through a sound, a vibration, etc that they do not wear the safety belt. The disclosure is not limited thereto.

As another application scene, taking the vehicle being a conveyance as an example, the camera at the traffic intersection may monitor the conveyance at the traffic intersection to obtain the image, and the electronic device may communicate with the camera at the traffic intersection to obtain the image. It should be understood that, due to a capturing angle and a capturing distance, the image collected by the camera may only include the driver's seat region and the front passenger seat region, without displaying a rear passenger seat region. Therefore, in the disclosure, only the faces of the driver's seat region and the front passenger seat region may be recognized, and each wearing region (i.e., the target region) of the safety belt below each face region may be recognized.

Further, when the wearing state of the safety belt is in the non-wearing state, license plate recognition is continuously performed on the conveyance. For example, a license plate region may be recognized from the image based on a target recognition algorithm, and text recognition may be performed on the license plate region to obtain license plate information based on the deep learning technology. After the license plate information is recognized, the license plate information may be marked by a relevant personnel to punish the conveyance accordingly. In this way, the driver may be reminded and warned, and awareness of the driver obeying the traffic regulation is raised.

It should be noted that, the above only takes the vehicle being a conveyance as an example in the disclosure. In a practical application, the vehicle is not limited to the conveyance, and may also include such as an airplane and a space shuttle. The wearing state of the safety belt in the collected image may be recognized based on the above method, which is not limited by the disclosure.

It should be noted that, although the image may be directly detected with the model to determine wearing state of the safety belt, recognizing a whole image may enable a larger size of the image is inputted, causing a large computation amount of the algorithm, which is not applicable to a device with a low computing power.

In the disclosure, after the image is obtained by monitoring the vehicle, the wearing region of the safety belt is estimated with the prior knowledge that a region where the driver or the passenger wears the safety belt generally is located below the face region. The wearing region is recorded as the target region in the disclosure. The wearing state of the safety belt is recognized only for the target region, which effectively reduces the interference of other useless information in the image, and reduces the size of the image inputted to the model. The accuracy of the recognition result may also be improved on the basis of reducing the computation amount and improving the recognition rate. The method may be applied to the device with the low computing power, such as the vehicle-mounted device, which improves the applicability of the method.

With the method for recognizing the wearing state of the safety belt according to the embodiment of the disclosure, the face recognition is performed on the image that is obtained by monitoring the vehicle so as to obtain the face region, the target region is determined from the image based on the size and the position of the face region, and the wearing state of the safety belt is recognized based on the image feature of the target region. In this way, by estimating the wearing region of the safety belt, which is recorded as the target region in the disclosure, the wearing state of the safety belt is recognized only for the target region, thereby effectively reducing the interference of other useless information in the image, reducing the computation amount, and improving the recognition speed. The method may be applied to the device with the low computing power, such as the vehicle-mounted device, which improves the applicability of the method.

As a possible implementation, in order to further reduce the computation amount, in the disclosure, the region below the face region and having a certain distance from the face region may be taken as the target region. Description will be made in detail below to the above process with reference to Embodiment two.

FIG. 2 is a flow chart illustrating a method for recognizing a wearing state of a safety belt according to Embodiment two of the disclosure.

As illustrated in FIG. 2, the method for recognizing the wearing state of the safety belt may include the following blocks 201-205.

At block 201, an image is obtained by monitoring a vehicle.

The executing procedure at block 201 may refer to the executing procedure at block 101 in the above embodiment, which is not elaborated here.

At block 202, face recognition is performed on the image to obtain a face region.

As a possible implementation, in order to improve the accuracy of the recognition result, the face recognition may be performed on the image to obtain the face region based on the deep learning technology.

For example, detection is performed on the face region of the image with the face detection model to obtain the face region. A basic feature of the face is extracted by six layers of the convolution neural networks in the face detection model. The convolution network in each layer implements one image down-sampling. Face detection box regression is performed on a preset fixed number of face anchor boxes with different sizes based on the last three layers of the convolution neural networks, then the recognition result of the face region is outputted, that is, four vertex coordinates corresponding to the face region are outputted.

At block 203, an interval distance is determined based on a height of the face region.

In embodiments of the disclosure, after the face region is determined, the height of the face region may be determined based on the four vertex coordinates of the face region, and then the height of the face region may be taken as the interval distance. In detail, the four vertex coordinates of the face region include a pixel coordinate corresponding to an upper left corner, a pixel coordinate corresponding to a lower left corner, a pixel coordinate corresponding to an upper right corner, and a pixel coordinate corresponding to a lower right corner. The pixel coordinate corresponding to the upper left corner is marked as (x₁, y₁). The pixel coordinate corresponding to the upper right corner is marked as (x₂, y₂). The pixel coordinate corresponding to the lower right corner is marked as (x₃, y₃). The pixel coordinate corresponding to the lower left corner is marked as (x₄, y₄). A width of the face region is w=x₂-x₁, a height of the face region is h=y4-yi, then the interval distance is h.

At block 204, a region below the face region and having the interval distance from the face region is determined as the target region based on the position of the face region.

It may be known from the prior knowledge that, the wearing position of the safety belt is a downward region located below the face region. Therefore, in the disclosure, the region below the face region and having the distance h from the face region may be determined as the target region. Therefore, the interference of useless information in the image may be effectively reduced, and the image processing speed may be improved. The downward region refers to a region downwards the face region, which is relative to the face region.

At block 205, the wearing state of the safety belt is recognized based on an image feature of the target region.

The executing procedure at block 205 may refer to the executing procedure at block 104 in the above embodiments, which is not elaborated here.

As a possible implementation, in order to further improve the recognition efficiency, in the disclosure, instead of determining all the regions below the face region and having the distance h from the face region as the target region, the region which is below the face region, has the distance h from the face region and has an area with a set multiple of the face region is taken as the target region. Therefore, the recognition region of the safety belt may be maximized as much as possible on the premise of avoiding that the background is taken by the box. Description will be made in detail below to the above process with reference to Embodiment three.

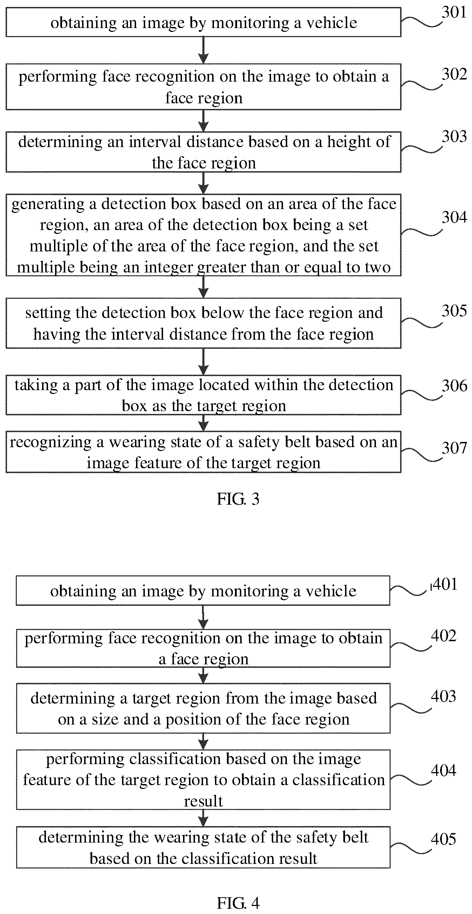

FIG. 3 is a flow chart illustrating a method for recognizing a wearing state of a safety belt according to Embodiment three of the disclosure.

As illustrated in FIG. 3, the method for recognizing the wearing state of the safety belt may include the following.

At block 301, an image is obtained by monitoring a vehicle.

At block 302, face recognition is performed on the image to obtain a face region.

At block 303, an interval distance is determined based on a height of the face region.

The executing procedure at blocks 301-303 may refer to the executing procedure in the above embodiments, which is not elaborated here.

At block 304, a detection box is generated based on an area of the face region. An area of the detection box is a set multiple of the area of the face region.

In embodiments of the disclosure, the set multiple may be preset.

In embodiments of the disclosure, the image in the detection box is used to indicate the wearing position of the safety belt.

It should be understood that, in order to accurately recognize the wearing state of the safety belt, the area of the detection box may not be set too small. In order to avoid that the background is taken by the detection box, the area of the detection box may not be set too large. Therefore, in the disclosure, in order to improve the processing efficiency and the accuracy of the recognition result, the area of the detection box may be the set multiple of the area of the face region. The set multiple may be an integer or a floating point number that is greater than or equal to two. For example, the area of the detection box may be twice the area of the face region, thereby maximizing the recognition region of the safety belt as much as possible on the premise of avoiding that the background is taken by the detection box taking.

At block 305, the detection box is set below the face region and having the interval distance from the face region.

It may be known from the prior knowledge that, the wearing position of the safety belt is below the face. Therefore, in the disclosure, the detection box may be set below the face region and having the interval distance from the face region.

In other words, after the face region is determined, four vertex coordinates corresponding to the face region may be determined. For example, a pixel coordinate (x₁, y₁) corresponding to the upper left corner, a pixel coordinate (x₂, y₂) corresponding to the upper right corner, a pixel coordinate (x₃, y₃) corresponding to the lower right corner, and a pixel coordinate (x₄, y₄) corresponding to the lower left corner may be determined. Therefore, a width of the face region is w=x₂-x₁, a height of the face region is h=y₄-y₁, and the interval distance is h. In this case, the face detection box corresponding to the face region may be translated downward by h units to obtain four vertex coordinates corresponding to the detection box corresponding to the safety belt, i.e., a pixel coordinate (x₁, y₁-h) corresponding to an upper left corner, a pixel coordinate (x₂, y₂-h) corresponding to an upper right corner, a pixel coordinate (x₃, y₃-h) corresponding to a lower right corner, and a pixel coordinate (x₄, y₄-h) corresponding to a lower left corner. Furthermore, in order to maximize the recognition region of the safety belt as much as possible on the premise of avoiding that the background is taken by the detection box , in the disclosure, the detection box corresponding to the safety belt may also be enlarged by a set multiple. For example, the set multiple may be 2, 2.5, or the like.

At block 306, a part of the image located within the detection box is taken as the target region.

In embodiments of the disclosure, after the position of the detection box is set, the part of the image located within the detection box may be taken as the target region. In this way, the interference of useless information in the image may be effectively reduced, and the image processing speed may be improved.

At block 307, the wearing state of the safety belt is recognized based on an image feature of the target region.

The executing procedure at block 307 may refer to the executing procedure at block 104 in the above embodiments, which is not elaborated.

As a possible implementation, after the target region is determined from the image, a resolution of the target region may also be transformed so that the transformed resolution of the target region may conform to a target resolution. In this way, the target region is transformed into a uniform size, which facilitates subsequent recognition.

The target resolution is preset. For example, when the wearing state of the safety belt is recognized for the target region by utilizing the classification model, the target resolution may be a size of an image inputted into the classification model, such as 144*144. In this case, the target region is transformed into the uniform size, which facilitates the target region serving as a subsequent input of the classification model.

It should be noted that, the value of each pixel in the target region may be taken between 0 and 255. In order to avoid recognition interference caused by a brightness of each pixel in the target region, in the disclosure, the value of each pixel in the target region with the target resolution may be normalized, such that the value of each pixel is within a target value range.

For example, a normalization formula may be: (x-128)/256, where x represents the value of each pixel, and x is taken between 0 and 255. After the value of each pixel in the target region with the target resolution is normalized, the value of each pixel is between [-0.5, 0.5].

As a possible implementation, in order to improve the accuracy of the recognition result, the image feature of the target region may be classified based on the deep learning technology so as to determine the wearing state of the safety belt. Description will be made in detail below to the above process with reference to Embodiment four.

FIG. 4 is a flow chart illustrating a method for recognizing a wearing state of a safety belt according to Embodiment four of the disclosure.

As illustrated in FIG. 4, the method for recognizing the wearing state of the safety belt may include the following.

At block 401, an image is obtained by monitoring a vehicle.

At block 402, face recognition is performed on the image to obtain a face region.

At block 403, a target region is determined from the image based on a size and a position of the face region.

The executing procedure at blocks 401-3403 may refer to the executing procedure in the above embodiments, which is not elaborated here.

At block 404, classification is performed based on the image feature of the target region to obtain a classification result.

A principle of image classification is that: similar scenes in the image may have the same or similar image feature in the same condition, such as a spectral information feature and a spatial information feature. Some inherent similarity in the similar scenes is shown, that is, feature vectors for same scene pixels may be clustered to a spatial region with the same feature, while feature vectors for the different scene pixels may be clustered to a spatial region with different features due to different spectral information features and spatial information features of different scenes.

Therefore, in the disclosure, the image feature of the target region may be classified to determine the wearing state of the safety belt. For example, a classification model may be employed to classify the target region.

At block 405, the wearing state of the safety belt is determined based on the classification result.

In embodiments of the disclosure, the wearing state of the safety belt may be determined based on the classification result.

For example, after the convolution network extracts the image feature, the classification model may connect the full link layer with the output layer and output the classification probability. When the classification probability is smaller than 0.5, the classification probability may be approximately considered as 0, and it may be determined that the wearing state of the safety belt is in the non-wearing state. When the classification probability is greater than or equal to 0.5, the classification probability may be approximately considered as 1, and it may be determined that the wearing state of the safety belt is in the wearing state.

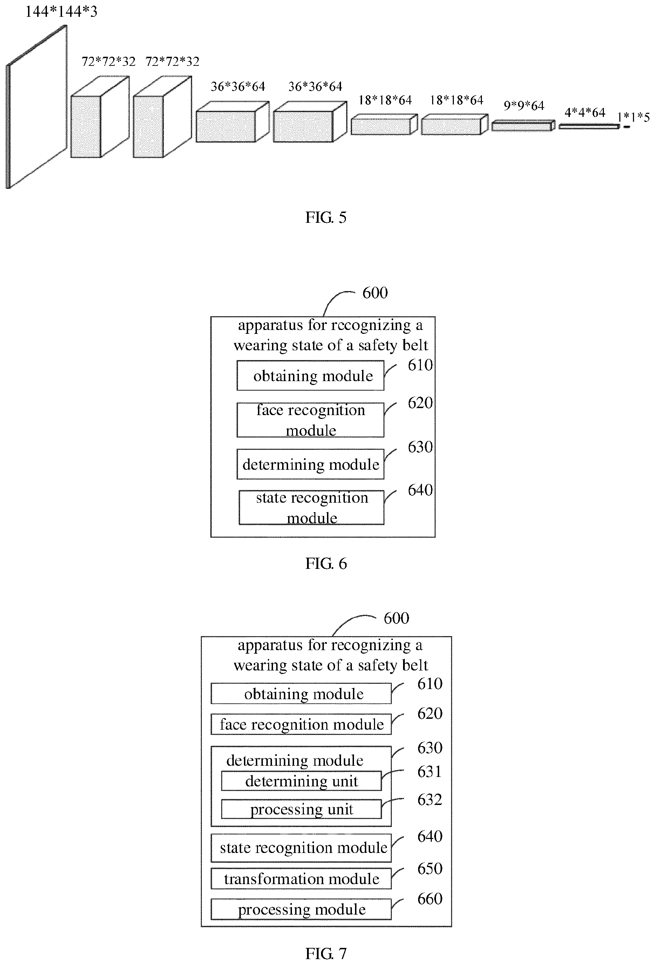

As an example, the image feature of the target region may be extracted based on the convolutional neural network illustrated in FIG. 5, and the wearing state of the safety belt may be obtained by the output of the full link layer. The convolution neural network includes the convolution layer and the pooling layer.

The convolutional neural network includes eight convolution layers and five pooling layers (not illustrated in FIG. 5). The input of the convolutional neural network may be an RGB (red green blue) image with a resolution 144*144. Different convolution layers may convolve the image feature by different convolution kernels, and extract different sizes or different granularities of the image feature. A size of a feature vector finally outputted is 1*1*5 (tensor space size).

As an example, after the image is obtained, the face recognition may be performed on the image based on the face detection model, and the face detection box corresponding to each face region may be obtained. Four vertex coordinates of the face detection box for each face region may be marked, i.e., a pixel coordinate (x₁, y₁) corresponding to an upper left corner, a pixel coordinate (x₂, y₂) corresponding to an upper right corner, a pixel coordinate (x₃, y₃) corresponding to a lower right corner, and a pixel coordinate(x4, y₄) corresponding to a lower left corner. Therefore, a width of the face region is w=x₂-x₁, and a height of the face region is h=y₄-y₁.

It may be known from the prior knowledge that, the wearing position of the safety belt is located below the face. The face detection box may be translated downwards by h units to obtain four vertex coordinates corresponding to the detection box corresponding to the safety belt, i.e., a pixel coordinate (x₁, y₁-h) corresponding to an upper left corner, a pixel coordinate (x₂, y₂-h) corresponding to an upper right corner, a pixel coordinate (x₃, y₃-h) corresponding to a lower right corner, and a pixel coordinate (x₄, y₄-h) corresponding to a lower left corner.

In order to maximize the recognition region of the safety belt as much as possible on the premise of avoiding that the background is taken by the detection box, in the disclosure, the detection box corresponding to the safety belt may also be enlarged by 2 times for cutting. The size of the cut image is transformed into an image with a resolution 144*144.

Next, in order to avoid the recognition interference caused by the brightness of each pixel in the target region, in the disclosure, normalization processing is performed on the transformed image, such that the value of each pixel is between [-0.5, 0.5].

Finally, the image feature of the image after the normalization processing is extracted by the convolution neural network, and the wearing state of the safety belt is outputted by the full link layer.

With the method for recognizing the wearing state of the safety belt according to embodiments of the disclosure, by utilizing the prior knowledge that a region where the driver or the passenger wears the safety belt is located below the face region, the wearing region of the safety belt is estimated based on the face detection. Then it is recognized by employing the classification method whether the driver or passenger wears the safety belt. In this way, the interference of other useless information in the image may be effectively reduced. Meanwhile, the size of the image inputted into the model is reduced, the accuracy of the recognition result is improved, and the computation amount is greatly reduced. The method may be applied to the device with the low computing power, such as the vehicle-mounted device, which improves the applicability of the method.

To achieve the above embodiments, the disclosure also provides an apparatus for recognizing a wearing state of a safety belt.

FIG. 6 is a block diagram illustrating an apparatus for recognizing a wearing state of a safety belt according to Embodiment five of the disclosure.

As illustrated in FIG. 6, the apparatus 600 for recognizing the wearing state of the safety belt includes: an obtaining module 610, a face recognition module 620, a determining module 630, and a state recognition module 640.

The obtaining module 610 is configured to obtain an image by monitoring a vehicle.

The face recognition module 620 is configured to perform face recognition on the image to obtain a face region.

The determining module 630 is configured to determine a target region from the image based on a size and a position of the face region.

The state recognition module 640 is configured to recognize a wearing state of a safety belt based on an image feature of the target region.

Further, in a possible implementation of embodiments of the disclosure, please refer to FIG. 7. On the basis of embodiments illustrated in FIG. 6, the apparatus 600 for recognizing the wearing state of the safety belt may also include a transformation module 650 and a processing module 660.

The determining module 630 includes: a determining unit 631 and a processing unit 632.

The determining unit 631 is configured to determine an interval distance based on a height of the face region.

The processing unit 632 is configured to determine a region below the face region and having the interval distance from the face region as the target region based on the position of the face region.

As a possible implementation, the processing unit is configured to: generate a detection box based on an area of the face region, an area of the detection box being a set multiple of the area of the face region; set the detection box below the face region and having the interval distance from the face region; and take a part of the image located within the detection box as the target region.

The transformation module 650 is configured to perform resolution transformation on the target region, such that the target region after the resolution transformation conforms to a target resolution.

The processing module 660 is configured to perform normalization processing on a value of each pixel point in the target region with the target resolution, such that the value of each pixel point is within a target value range.

As a possible implementation, the state recognition module is configured to: perform classification based on the image feature of the target region to obtain a classification result; and determine the wearing state of the safety belt based on the classification result.

It should be noted that the description for the method for recognizing the wearing state of the safety belt in embodiments illustrated in FIG. 1 to 4 is also applicable to the apparatus for recognizing the wearing state of the safety belt in this embodiment, which is not be elaborated here.

With the apparatus for recognizing the wearing state of the safety belt according to embodiments of the disclosure, the face recognition is performed on the image by monitoring the vehicle to obtain the face region, the target region is determined from the image based on the size and the position of the face region, and the wearing state of the safety belt is recognized based on the image feature of the target region. In this way, by estimating the wearing region of the safety belt, which is recorded as the target region in the disclosure, the wearing state of the safety belt is recognized only for the target region, thereby effectively reducing the interference of other useless information in the image, reducing the computation amount, and improving the recognition speed. The apparatus may be applied to the device with the low computing power, such as the vehicle-mounted device, which improves the applicability of the method.

According to embodiments of the disclosure, the disclosure also provides an electronic device and a readable storage medium.

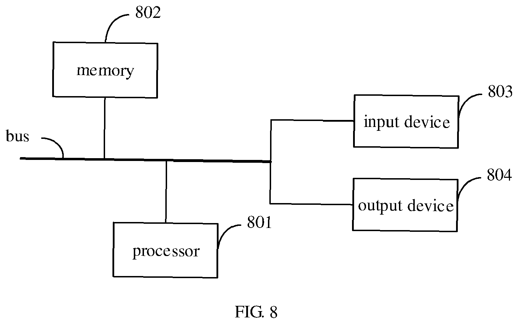

As illustrated in FIG. 8, FIG. 8 is a block diagram illustrating an electronic device capable of implementing a method for recognizing a wearing state of a safety belt according to embodiments of the disclosure. The electronic device aims to represent various forms of digital computers, such as a laptop computer, a desktop computer, a workstation, a personal digital assistant, a server, a blade server, a mainframe computer and other suitable computer. The electronic device may also represent various forms of mobile devices, such as personal digital processing, a cellular phone, a smart phone, a wearable device and other similar computing device. The components, connections and relationships of the components, and functions of the components illustrated herein are merely examples, and are not intended to limit the implementation of the disclosure described and/or claimed herein.

As illustrated in FIG. 8, the electronic device includes: one or more processors 801, a memory 802, and interfaces for connecting various components, including a high-speed interface and a low-speed interface. Various components are connected to each other via different buses, and may be mounted on a common main board or in other ways as required. The processor may process instructions executed within the electronic device, including instructions stored in or on the memory to display graphical information of the GUI (graphical user interface) on an external input/output device (such as a display device coupled to an interface). In other implementations, a plurality of processors and/or a plurality of buses may be used together with a plurality of memories if desired. Similarly, a plurality of electronic devices may be connected, and each device provides some necessary operations (for example, as a server array, a group of blade servers, or a multiprocessor system). In FIG. 8, a processor 801 is taken as an example.

The memory 802 is a non-transitory computer readable storage medium provided by the disclosure. The memory is configured to store instructions executable by at least one processor, to enable the at least one processor to execute the method for recognizing the wearing state of the safety belt provided by the disclosure. The non-transitory computer readable storage medium provided by the disclosure is configured to store computer instructions. The computer instructions are configured to enable a computer to execute the method for recognizing the wearing state of the safety belt provided by the disclosure.

As the non-transitory computer readable storage medium, the memory 802 may be configured to store non-transitory software programs, non-transitory computer executable programs and modules, such as program instructions/module (such as the obtaining module 610, the face recognition module 620, the determining module 630, and the state recognition module 640 illustrated in FIG. 6) corresponding to the method for recognizing the wearing state of the safety belt according to embodiments of the disclosure. The processor 801 is configured to execute various functional applications and data processing of the server by operating non-transitory software programs, instructions and modules stored in the memory 802, that is, implements the method for recognizing the wearing state of the safety belt according to the above method embodiments.

The memory 802 may include a storage program region and a storage data region. The storage program region may store an application required by an operating system and at least one function. The storage data region may store data created according to predicted usage of the electronic device based on the semantic representation. In addition, the memory 802 may include a high-speed random access memory, and may also include a non-transitory memory, such as at least one disk memory device, a flash memory device, or other non-transitory solid-state memory device. In some embodiments, the memory 802 may optionally include memories remotely located to the processor 801, and these remote memories may be connected to the electronic device via a network. Examples of the above network include, but are not limited to, an Internet, an intranet, a local area network, a mobile communication network and combinations thereof.

The electronic device capable of implementing the method for recognizing the wearing state of the safety belt may also include: an input device 803 and an output device 804. The processor 801, the memory 802, the input device 803, and the output device 804 may be connected via a bus or in other means. In FIG. 8, the bus is taken as an example.

The input device 803 may receive inputted digital or character information, and generate key signal input related to user setting and function control of the electronic device, such as a touch screen, a keypad, a mouse, a track pad, a touch pad, an indicator stick, one or more mouse buttons, a trackball, a joystick and other input device. The output device 804 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device, and at least one output device, and may transmit data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components and the front-end component. Components of the system may be connected to each other via digital data communication in any form or medium (such as, a communication network). Examples of the communication network include a local area network (LAN), a wide area networks (WAN), and the Internet.

The computer system may include a client and a server. The client and the server are generally remote from each other and generally interact via the communication network. A relationship between the client and the server is generated by computer programs operated on a corresponding computer and having a client-server relationship with each other. The server may be a cloud server, also known as cloud computing server or a cloud host, which is a host product in a cloud computing service system, to solve the defects of difficult management and weak business scalability in a traditional physical host and a VPS service.

With the technical solution according to embodiments of the disclosure, the face recognition is performed on the image by monitoring the vehicle to obtain the face region, the target region is determined from the image based on the size and the position of the face region, and the wearing state of the safety belt is recognized based on the image feature of the target region. In this way, by estimating the wearing region of the safety belt, which is recorded as the target region in the disclosure, the wearing state of the safety belt is recognized only for the target region, thereby effectively reducing the interference of other useless information in the image, reducing the computation amount, and improving the recognition speed. The technical solution may be applied to the device with the low computing power, such as the vehicle-mounted device, which improves the applicability of the method.

It should be understood that, steps may be reordered, added or deleted by utilizing flows in the various forms illustrated above. For example, the steps described in the disclosure may be executed in parallel, sequentially or in different orders, so long as desired results of the technical solution disclosed in the disclosure may be achieved, there is no limitation here.

The above detailed implementations do not limit the protection scope of the disclosure. It should be understood by the skilled in the art that various modifications, combinations, sub-combinations and substitutions may be made based on design requirements and other factors. Any modification, equivalent substitution and improvement made within the spirit and the principle of the disclosure shall be included in the protection scope of disclosure.

## Claims

1. A method for recognizing a wearing state of a safety belt, comprising:
obtaining (101, 201, 301, 401) an image by monitoring a vehicle;
performing (102, 202, 302, 402) face recognition on the image to obtain a face region;
determining (103, 403) a target region from the image based on a size and a position of the face region; and
recognizing (104, 205) a wearing state of a safety belt based on an image feature of the target region.

2. The method of claim 1, wherein determining the target region from the image based on the size and the position of the face region comprises:
determining (203, 303) an interval distance based on a height of the face region; and
determining (204, 307) a region below the face region and having the interval distance from the face region as the target region based on the position of the face region.

3. The method of claim 2, wherein determining the region below the face region and having the interval distance from the face region as the target region based on the position of the face region comprises:
generating (304) a detection box based on an area of the face region, an area of the detection box being a set multiple of the area of the face region;
setting (305) the detection box below the face region and having the interval distance from the face region; and
taking (306) a part of the image located within the detection box as the target region.

4. The method of any one of claims 1-3, after determining the target region from the image based on the size and the position of the face region, the method further comprising:
performing resolution transformation on the target region, such that the target region after the resolution transformation has a target resolution.

5. The method of claim 4, after performing the resolution transformation on the target region, such that the target region after the resolution transformation has the target resolution, the method further comprising:
performing normalization processing on a value of each pixel point in the target region with the target resolution, such that the value of each pixel point is within a target value range.

6. The method of any one of claims 1-3, wherein recognizing the wearing state of the safety belt based on the image feature of the target region comprises:
performing classification based on the image feature of the target region to obtain a classification result; and
determining the wearing state of the safety belt based on the classification result.

7. An apparatus for recognizing a wearing state of a safety belt, comprising:
an obtaining module (610), configured to obtain an image by monitoring a vehicle;
a face recognition module (620), configured to perform face recognition on the image to obtain a face region;
a determining module (630), configured to determine a target region from the image based on a size and a position of the face region; and
a state recognition module (640), configured to recognize a wearing state of a safety belt based on an image feature of the target region.

8. The apparatus of claim 7, wherein the determining module comprises:
a determining unit (631), configured to determine an interval distance based on a height of the face region; and
a processing unit (632), configured to determine a region below the face region and having the interval distance from the face region as the target region based on the position of the face region.

9. The apparatus of claim 8, wherein the processing unit is configured to:
generate a detection box based on an area of the face region, an area of the detection box being a set multiple of the area of the face region;
set the detection box below the face region and having the interval distance from the face region; and
take a part of the image located within the detection box as the target region.

10. The apparatus of any one of claims 7-9, further comprising:
a transformation module (650), configured to perform resolution transformation on the target region, such that the target region after the resolution transformation conforms to a target resolution.

11. The apparatus of any one of claims 7-10, further comprising:
a processing module (660), configured to perform normalization processing on a value of each pixel point in the target region with the target resolution, such that the value of each pixel point is within a target value range.

12. The apparatus of any one of claims 7-9, wherein the state recognition module is configured to:
perform classification based on the image feature of the target region to obtain a classification result; and
determine the wearing state of the safety belt based on the classification result.

13. An electronic device, comprising:
at least one processor; and
a memory, communicatively coupled to the at least one processor,
wherein the memory is configured to store instructions executable by the at least one processor, and the at least one processor is caused to execute the method for recognizing the wearing state of the safety belt according to any one of claims 1 to 6 when the instructions are executed by the at least one processor.

14. A non-transitory computer readable storage medium having computer instructions stored thereon, wherein the computer instructions are configured to cause a computer to execute the method for recognizing the wearing state of the safety belt according to any one of claims 1 to 6.

15. A computer program product, wherein when instructions in the computer program product are executed by a processor, the method for recognizing the wearing state according to any one of claims 1-6 is implemented.
